# EUROPEAN PATENT APPLICATION

(11) **EP 4 811 644 A1**
(43) Date of publication of application: **23.09.2026**
(21) Application number: 26165627.6
(22) Date of filing: 17.03.2026
(51) Int. Cl.: H02P 9/00, H02P 29/024

(54) **STATOR-ROTOR PROTECTION FOR MULTI-PHASE WOUND-ROTOR MACHINES**

(30) Priority: 19.03.2025 US 202563774257 P; 18.06.2025 US 202563898080 P; 11.03.2026 US 202619563201
(71) Applicant: Schweitzer Engineering Laboratories, Inc., Pullman, WA 99163 (US)
(72) Inventor: Kasztenny, Bogdan, Markham (CA); Finney, Dale, Little Bras D'or (CA); Taylor, Douglas, Spokane (US)
(74) Representative: Smith, Jeremy Robert

(57) **Abstract**

The present disclosure pertains to systems and methods for protecting multi-phase wound-rotor electric machines in an electric power delivery system. Protection of these machines uses an equivalent rotor current determined using rotor current signals, and an equivalent stator current determined using stator current signals. The equivalent rotor and stator currents are independent of the voltage and rotor position signals and are used in protection elements to determine a fault condition.

## Description

### TECHNICAL FIELD

This disclosure relates to protection for multi-phase wound-rotor machines using equivalent stator current and equivalent rotor current. The protection is capable of detecting both turn and phase faults in either of the windings without rotor position.

### BRIEF DESCRIPTION OF THE DRAWINGS

Non-limiting and non-exhaustive embodiments of the disclosure are described, including various embodiments of the disclosure with reference to the figures, in which:
**Figure 1** illustrates a simplified diagram of a multi-phase wound-rotor machine in a pumped storage hydro application protected by an intelligent electronic device (IED).
**Figure** 2 illustrates a logic diagram for determining equivalent current to represent three phase currents for protection of a multi-phase wound-rotor machine in accordance with several embodiments.
**Figure 3** illustrates a logic diagram of stator-rotor differential protection for a multi-phase wound-rotor machine in accordance with several embodiments.
**Figure 4** illustrates a simplified logic diagram of external fault detection (EFD) used in differential protection in accordance with several embodiments.
**Figure 5** illustrates a simplified block diagram of phase comparison protection for a multi-phase wound-rotor machine using equivalent stator current and equivalent rotor current in accordance with several embodiments.
**Figure 6** illustrates a simplified block diagram of an IED for providing stator-rotor protection for a multi-phase wound-rotor machine in accordance with several embodiments.

In the following description, numerous specific details are provided for a thorough understanding of the various embodiments disclosed herein. However, those skilled in the art will recognize that the systems and methods disclosed herein can be practiced without one or more of the specific details, or with other methods, components, materials, etc. In addition, in some cases, well-known structures, materials, or operations may not be shown or described in detail in order to avoid obscuring aspects of the disclosure. Furthermore, the described features, structures, or characteristics may be combined in any suitable manner in one or more alternative embodiments.

### DETAILED DESCRIPTION

The embodiments herein describe turn-fault protection of multi-phase wound-rotor machines (often referred to as doubly-fed induction generators (DFIGs)). The protection of such machines described herein follows the differential protection principle as well as the phase comparison principle, which use a novel set of signals that eliminate dependency on stator and rotor voltages as well as rotor position. While several embodiments are described using DFIGs as an example of a multi-phase wound-rotor machine, the systems and methods described may be used for protection of many other implementations of multi-phase wound-rotor machines.

Protection engineers have been working on addressing protection issues related to DFIGs for several decades. These generators allow a wide range of rotor speeds, making them well-suited for use in wind turbine generation (WTG) applications. Over the years, these machines have grown in size from a 1 MW range to several megawatts. The focus so far has been on protecting the network in the vicinity of DFIGs. The DFIG itself is typically protected by the manufacturer with only basic protection applied at the stator side and proprietary protection built into the converter on the rotor side. This minimalistic approach is partially justified by the small power rating of DFIGs in WTG applications and the economic pressures on the WTG projects.

DFIG technology has been used or proposed for new applications where adjustable speed is beneficial. These applications include pumped storage hydro (PSH) generation and synchronous condenser (SC) installations. In these applications, the machines are rated at tens or hundreds of megawatts. We refer to these machines as wound-rotor asynchronous generators (WRAG), a name that is technically more correct than DFIG. DFIGs force the rotor currents by using converters rather than allow the currents to be induced by the rotor slip.

The embodiments described herein introduce a new type of differential protection element that spans both the stator and rotor. Based on the ampere-turn balance between the stator and rotor, the new protection element detects phase and turn faults in either of the windings. The element does not need voltages to obtain the rotating reference frames for the stator and rotor. Neither does it need the rotor position encoder to further align the stator and rotor reference frames. Several application considerations are also discussed, such as current measurement, current polarity, current transformer (CT) saturation during external faults, and obtaining the turn-ratio setting.

The development of adjustable-speed machines in WTG applications has played an important role in the growth of wind energy over the last two decades. The technology used by an adjustable-speed PSH unit is essentially the same as that used by a WTG unit. PSH units, however, have much larger MVA ratings than the WTG units that are based on the DFIGs, and the PSH units involve both the turbine (generating) and pumping (motoring) modes of operation.

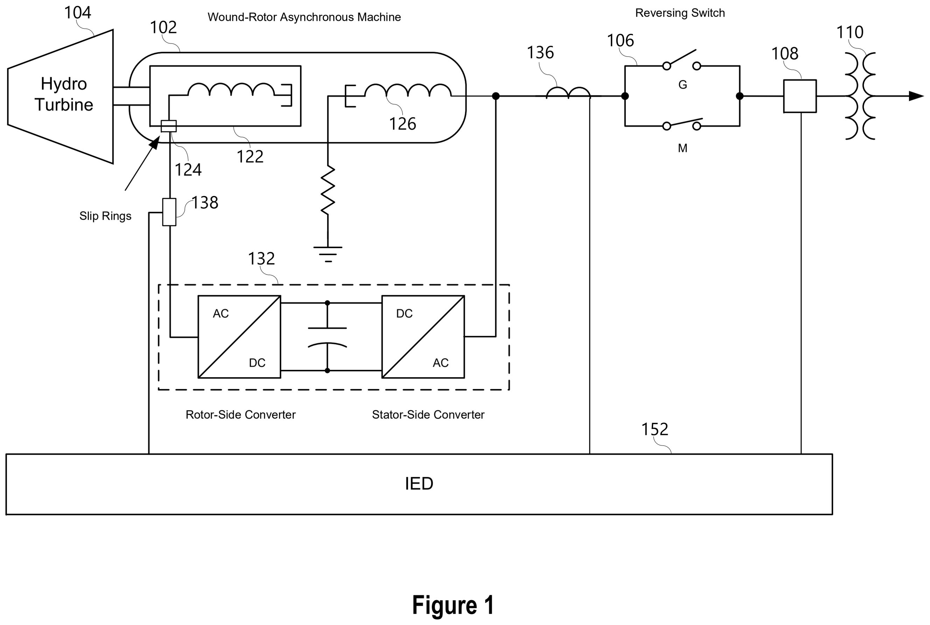

**Figure** 1 illustrates an example of a multi-phase wound rotor machine as an adjustable-speed PSH unit 102. During generating operations, a hydro turbine 104 drives the rotor 122 within the stator windings 126 to produce electric power available via the stator terminals. The electric power may be supplied to a transformer such as generator step-up transformer 110. Circuit breaker 108 may be operated to isolate the generator from the transformer in the event of a fault. Also illustrated is IED 152 which may obtain stator current signals via CTs 136 on the stator terminals, as well as rotor current signals via rotor current measuring sensors 138 (such as, for example, resistive shunts, Hall-effect transducers, or the like). The IED 152 may use the stator current signals and rotor current signals to determine a turn fault on the machine 102 in accordance with several embodiments described further herein.

Adjustable-speed PSH units share some similarities with conventional PSH units. For example, in order to transition from generating to pumping, the adjustable-speed PSH unit needs to disconnect from the grid and come to a complete stop. A reversing switch 106 at the stator terminals is then used to transpose two phases to change the rotation direction.

Also, both conventional and adjustable-speed PSH units need a starting method when in the pumping mode. A variety of methods have been used to start conventional PSH units. A converter link 132 (consisting of converters) operated as an adjustable-speed drive (ASD) is often used. The adjustable-speed PSH unit trades this converter link for a larger converter link that feeds the rotor of the wound-rotor asynchronous machine.

The stator-side and rotor-side converters may have individual controllers. Typically, these controllers use the d-axis and q-axis of Park's transform currents to decouple the regulation of real and reactive power. Rotor speed, dc link voltage, as well as real and imaginary components of the rotor currents are all controllable via the converter control loops.

Asynchronous wound-rotor machines can be used in several systems in addition to PSH. For example, SCs have historically been used to provide reactive power for voltage support. Rotor inertia also helps to improve transient stability. Recently, to alleviate the impact of inverter-based resources (IBRs) on system inertia and fault currents, SCs have been deployed to improve transient stability and increase fault current to aid correct protection operation. In these applications, SC inertia may be further increased with the addition of a flywheel. Recently, asynchronous condensers have been proposed. These applications use a wound-rotor asynchronous generator rather than a synchronous generator.

In addition to the provision of reactive power, adjustable-speed operation allows the condenser to exchange real power between the power system and the rotating mass while operating within the rotor (and flywheel, if installed) speed limits. Consequently, it can improve transient stability in low-inertia power systems.

The converters reduce the wound-rotor asynchronous generator fault-current contribution during system faults and make the fault current different than that of a synchronous generator. As a result, asynchronous condensers are not a solution to the IBR-reduced fault-current contribution problem.

Wound-rotor asynchronous generators can be rated at upwards of several hundred megawatts. Therefore, fast, secure, and dependable protection of these generators is critical. Until recently, research into protection methods for machines of this type has been sparce. This lack of research can be attributed to the relatively recent appearance of these generators in the power system, their small size, and the cost pressures on WTG projects.

Due to some similarities between synchronous generators and wound-rotor asynchronous generators, the latter may be protected by applying or adapting many synchronous generator protection schemes. However, because the rotor circuit is supplied via brushes and slip rings 124, only one end of the rotor winding is accessible for rotor current measurement. This lack of access to currents on both ends of the rotor prevents the application of a conventional differential protection element based on Kirchhoff's current law.

The rotor speed in wound-rotor asynchronous generators is expected to be at or near synchronous speed for extended periods, resulting in rotor currents being dc currents or of very low frequency. Rotor current measurement is therefore another challenge because it cannot use traditional CTs.

Turn faults in generators are difficult to detect because they do not upset the current balance in a differential protection element that is based on Kirchhoff's current law. A new method for protection of wound-rotor asynchronous generators is disclosed herein.

The stator and rotor windings 126, 122 in a wound-rotor asynchronous generator are magnetically coupled. The air gap between their magnetic cores and the rotation of one winding against the other make the formulation of the ampere-turn balance equations more complex than in other applications, such as for transformer differential protection. Nonetheless, this ampere-turn balance allows us to devise a protection element that spans both the stator and rotor and is capable of detecting phase and turn faults in either winding.

For windings that are tied with the ampere-turn balance move against one another, such as in rotating machines, an ampere-turn balance equation is not straightforward. In the case of a synchronous generator, the ampere-turns may be balanced between the negative-sequence current in the stator and the double-frequency component in the field current (the term double-frequency refers to twice the frequency of the stator voltages and currents). The stator-rotor ampere-turn balance differential protection element may be derived for a wound-rotor asynchronous generator as follows.

In a wound-rotor asynchronous generator, both the stator and rotor windings are three-phase windings. It is convenient to represent the three phase currents by their direct (d), quadrature (q), and zero-sequence (0) components in Park's rotating reference frame. In a stator winding, the d-axis stator current is decoupled from the q-axis stator current. Similarly, in a rotor winding, the d-axis rotor current is decoupled from the q-axis rotor current. In Park's rotating reference frame, the d-axis and q-axis equivalent windings are stationary. The rotating reference frames may be selected for the rotor and the stator in such a way that the stationary d-axes in the stator and rotor align (the stationary q-axes in the stator and rotor would also align as a result). In such a case, the stator d-axis current only couples with the rotor d-axis current and the stator q-axis current only couples with the rotor q-axis current. As a result, a differential protection element may be derived that balances the stator and rotor d-axis currents. Additionally, a second differential protection element may be derived that balances the stator and rotor q-axis currents. Of course, the balance must account for the stator and rotor turns ratio.

In various previous implementations, voltages and/or angular position information were required to apply differential elements in such rotating frames. Angular positions may be provided by signals such as, for example: stator rotating field position respective to the stator; rotor rotating field position respective to the rotor; and the rotor position respective to the stator.

Voltage-based stator and rotor phase lock loops (PLLs) that work with the stator and rotor voltages, respectively, can be used to obtain the first two angular position signals. A rotor position encoder can be used to obtain the rotor position respective to the stator.

However, the rotor position encoder adds a failure mode to the protection scheme and the PLLs may exhibit transient errors as the voltages change and shift during external faults. Also, the rotor voltage that is supplied by an inverter is heavily distorted even during steady-state conditions, and it may change and shift significantly when the crowbar (shorting device) in the rotor circuit closes or opens. PLL errors can cause a spurious differential current in the differential element that balances currents obtained by using the PLLs. Additionally, reliance on voltages from both the stator and rotor would make the differential element less reliable (current-only differential elements are preferred).

The embodiments herein eliminate the need for angular position signals. The d-axis and q-axis current components are orthogonal components of a rotating current vector and focus on the magnitude of that vector, as shown in Equation 1: ${i}_{S} = \sqrt{{i}_{Sd}^{2} + {i}_{Sq}^{2}} , {i}_{R} = \sqrt{{i}_{Rd}^{2} + {i}_{Rq}^{2}}$ where:
i_{S} is the stator current vector magnitude;
i_{R} is the rotor current vector magnitude;
i_{Sd} is the stator d-axis current;
i_{Sq} is the stator q-axis current;
i_{Rd} is the rotor d-axis current; and
i_{Rq} is the rotor q-axis current.

If the d-axis current in the stator matches the d-axis current in the rotor and the q-axis current in the stator matches the q-axis current in the rotor (neglecting the magnetizing current), then the vector magnitudes given by Equation 1 will also match between the stator and rotor.

Because the expressions in Equation 1 only encode vector magnitudes of the stator and rotor currents, they are expected to be independent of the angular position signals and their individual reference frames. To prove it, the general Park transformation equation may be used for the stator phase currents i_{A}, i_{B}, and i_{C} as shown in Equation 2: $\left[\begin{matrix}{i}_{d} \\ {i}_{q}\end{matrix}\right] = \frac{2}{3} ⋅ \left[\begin{matrix}sin \left(Θ\right) & sin \left(Θ-120°\right) & sin \left(Θ+120°\right) \\ cos \left(Θ\right) & cos \left(Θ-120°\right) & cos \left(Θ+120°\right)\end{matrix}\right] ⋅ \left[\begin{matrix}{i}_{A} \\ {i}_{B} \\ {i}_{C}\end{matrix}\right]$ where Θ is the angle of the rotating reference frame.

The i_{S} and i_{R} current magnitudes may be calculated per Equation 1, to obtain the equivalent current, i, in Equation 3: $i = \sqrt{{i}_{d}^{2} + {i}_{q}^{2}} = \frac{2}{3 \sqrt{2}} \sqrt{{\left({i}_{A}-{i}_{B}\right)}^{2} + {\left({i}_{B}-{i}_{C}\right)}^{2} + {\left({i}_{C}-{i}_{A}\right)}^{2}}$

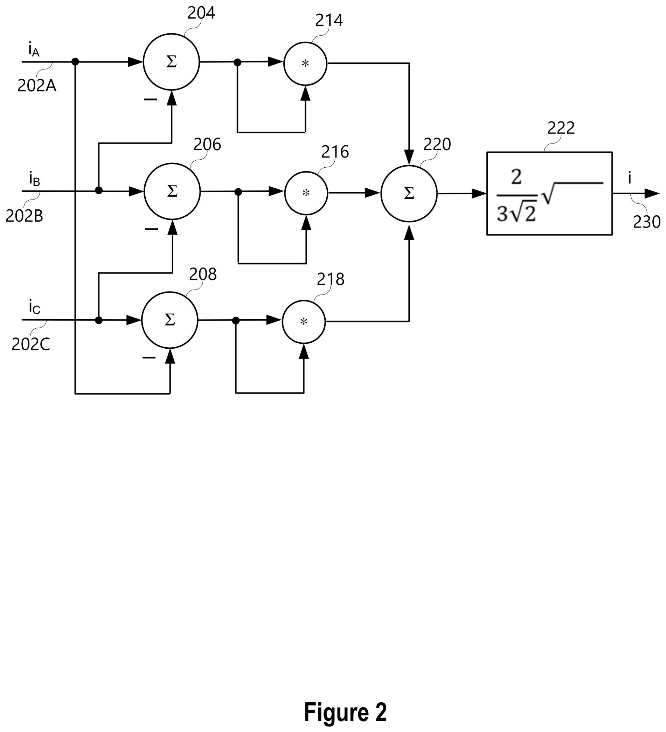

**Figure 2** illustrates a diagram for calculation of equivalent currents, i, using the three phase currents i_{A} 202A, i_{B} 202B, and i_{C} 202C. The calculation uses summing functions 204, 206, and 208 to find the differences between each current pair, and multiplication functions 214, 216, 218 to determine the squares of the differences. The squares of the differences are summed 220, and the scaling factor applied to the square root thereof in 222 to produce equivalent current i 230. It should be noted that the stator equivalent current may be determined according to Equation 3 using the three phase currents from the terminals of the stator, and the rotor equivalent current may be determined according to Equation 3 using the phase currents from the rotor.

The equivalent current as determined herein is independent of the angular position of the reference frame. The equivalent current ties together instantaneous values of the phase currents and therefore does not require phasors and by extension does not require frequency measurements. This advantage is especially important given 1) the vast difference between the stator and rotor frequencies and 2) the possibility of the rotor operating at super-synchronous speed when the rotor phase rotation is opposite to the phase rotation when the rotor operates at sub-synchronous speed. Furthermore, the equivalent current excludes the zero-sequence component and therefore is independent of the grounding method of the wye-connected winding to which it is applied (the stator may be resistive-grounded, while the rotor is normally ungrounded).

During balanced three-phase conditions, such as during normal load conditions, Equation 3 gives the value equal to the peak of the phase currents. The equivalent current can use a scaling factor different than 222 if the factor is the same for the stator and rotor currents. Equation 3 allows formulation of a current-only differential protection element independent of the angular position signals (the stator and rotor voltage-based PLLs and the rotor position encoder).

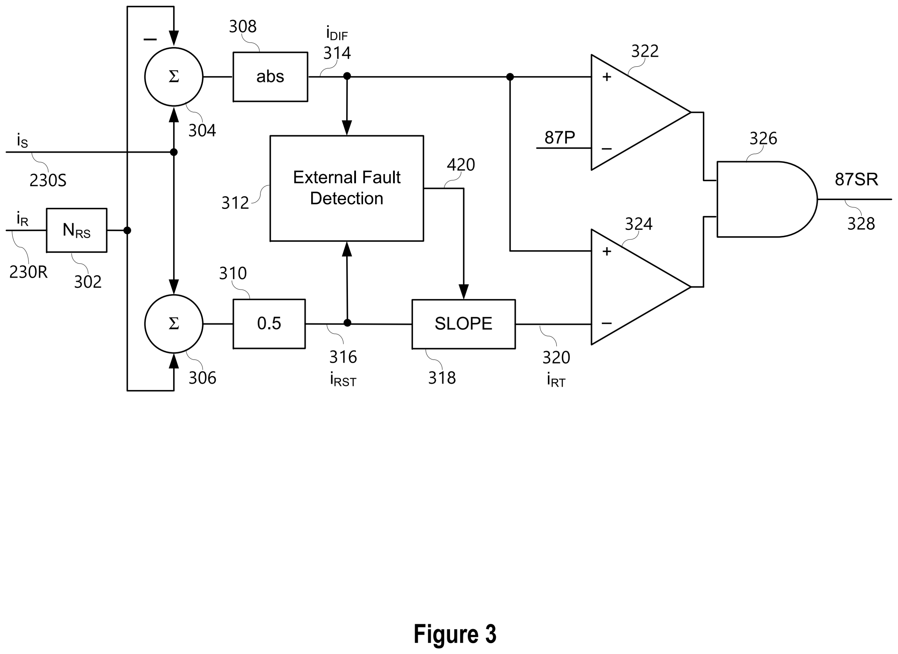

**Figure 3** shows a simplified logic diagram of the stator-rotor differential protection (87SR) element for wound-rotor asynchronous machines in accordance with several embodiments. The element compares the equivalent currents of the stator (i_{S}) 230S and rotor (i_{R}) 230 R obtained by using Equation 3 and adjusted for the turns ratio 302 between the stator and rotor (N_{RS}). If magnetizing current is neglected, these currents match, as long as both the stator and rotor windings are healthy. Differences between the two currents signify an internal fault in either the stator or the rotor (again, neglecting the magnetizing current).

The 87SR differential element obtains the differential current (i_{DIF}) 314 as the absolute value 308 of the difference 304 between the stator 230S and rotor 230R currents. The element is permitted to operate if the differential current 314 is greater 322 than the minimum pickup threshold, 87P.

To address current measurement errors, including saturation of the stator CTs during system faults, the 87SR differential element obtains the restraining current (i_{RST}) 316 as the average 306, 310 of the stator and rotor currents 230S, 230R. In this application, both currents 230S and 230R are always positive (see Equation 3), and therefore no magnitude or absolute value operations are required when forming the restraining current 316. The role of the restraining current 316 is to reflect the stress put on the current-measuring devices and to estimate the measuring errors that may result from that stress in order to use it as a variable threshold for the differential current 314. Several approaches to restraining can be used, including the maximum value of the two currents or the product of the two currents. Also, a more systematic approach can be taken that evaluates the level of each of the six currents that form the two compared currents as per Equation 3.

Additionally, the restraining current 316 can track and hold its past peak value with a decaying time constant on the order of 50 to 100 ms, as follows in Equation 4: ${i}_{RST \left(k\right)}^{*} = MAX \left({i}_{RST \left(k\right)},α⋅{i}_{RST \left(k-1\right)}^{*}\right)$ where:
k is a sample index; and,
α controls the decaying memory (α < 1)

Adding the decaying memory of the past peak values as shown in Equation 4 improves protection security when the instantaneous restraining current 1) temporarily decreases during an external fault because the instantaneous input currents oscillate and 2) decreases after an external fault is cleared. Equation 4 provides a magnitude-like response, allowing the 87SR differential element to ride through at the moment when the instantaneous restraining current 316 becomes very small.

The 87SR differential element applies a percentage slope characteristic 318 by multiplying the restraining current 316 by the SLOPE factor and obtains the variable threshold (restraint) i_{RT} 320 for the differential current. The 87SR differential element operates if the differential current 314 is greater 322, 324 than both 326 the minimum threshold (87P) and the restraint (i_{RT}) 320. As illustrated, AND gate 326 asserts the 87SR signal 328 upon assertion of both comparators 322, 324.

The 87SR element may use an external fault-detection (EFD) logic 312 to enhance security and sensitivity. The EFD logic 312 detects external faults and controls the SLOPE multiplier 318 to ensure protection security. If the EFD bit 420 is not asserted, such as during internal faults, the logic keeps the SLOPE 318 small, allowing high sensitivity. If the EFD bit 420 asserts during external faults, the logic raises the SLOPE multiplier 318 to ensure security. Such an EFD-controlled variable-slope method allows high sensitivity for internal faults while maintaining high security for external faults.

The EFD logic 312 follows a principle that is based on the observation that CTs do not saturate instantaneously but work correctly for at least the initial few milliseconds of a fault even if they subsequently saturate. Therefore, during external faults, the differential current 314 remains low while the restraining current 316 rises. Further, the differential current 314 may follow the restraining current 316 if the CTs saturate, but the rise in differential current 314 always lags the rise in the restraining current. Finally, during internal faults, both the differential 314 and restraining 316 currents develop simultaneously.

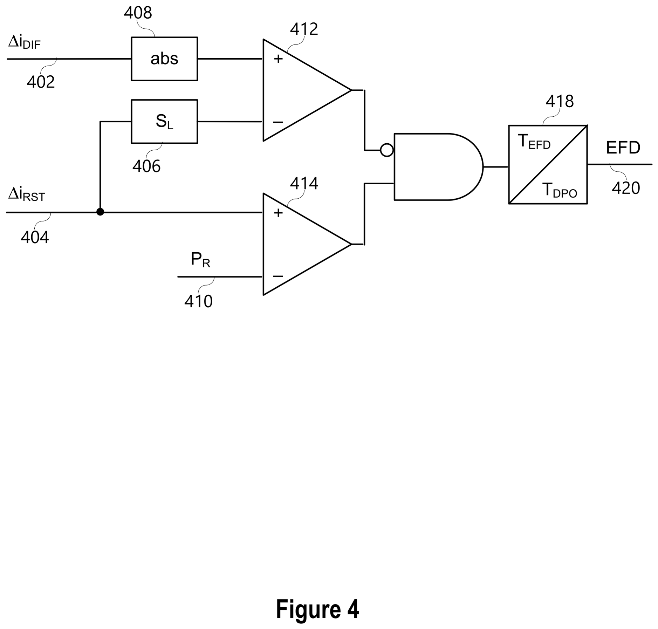

**Figure 4** shows a simplified diagram of typical EFD logic. For improved performance, the logic responds to the changes (Δ) in the instantaneous differential current Ai_{DIF} 402 and restraining currents Δi_{RST} 404 respective to their one-cycle old values. In general applications to ac currents, the differential and restraining currents 402, 404 are periodic in the steady state before the fault, and therefore the incremental (change) currents are zero before the fault. In the application that uses Equation 3, the differential and restraining currents are constant (dc) in the steady state before the fault, also resulting in the incremental currents of zero.

The EFD logic verifies that the restraining current 404 increased, such as by using a constant threshold P_{R} 410 of 1.5 pu (1.5 times the stator nominal peak current) in comparator 414. The EFD logic verifies that the differential current 402 remains small, such as less than 412 the percentage restraint when using the slope 406 of the restraining characteristic S_{L} (*e.g*., 0.20). If the restraining current 404 changes but the differential current 402 does not follow in a set time T_{EFD} (e.g., 3 ms) 418, the EFD logic asserts.

The EFD logic maintains the EFD bit by using the dropout timer T_{DPO} (e.g., 0.5 s) 418. Additionally, the EFD logic can seal-in the output and allow the EFD bit to reset only after the external fault is cleared (i.e., after the restraining current drops below about 150 percent of the stator nominal peak current and the differential current falls below the slope of the restraining characteristic). The EFD logic can also reset the EFD bit to restore full sensitivity and dependability if the external fault is cleared before T_{DPO} expires.

When asserted, the EFD bit enforces high security in the 87SR differential element, such as by increasing the percentage restraint slope in the 87SR differential element as shown in **Figure 3****.**

The 87SR differential element uses CTs to measure the stator currents, i.e., currents in an ac system with frequency near the system nominal frequency. In contrast, the bandwidth of the rotor currents spans from dc (normal operation) to the nominal system frequency (start up from rotor standstill, considering electrical frequency, irrespective of the number of poles for the stator and rotor). Therefore, the 87SR differential element may benefit through use of dc-coupled current-measuring devices for the rotor currents, such as resistive shunts or Hall-effect transducers. During system faults, both the CTs and the rotor current-measuring devices measure transient current components. Therefore, the frequency responses of the two types of sensors (stator CTs and rotor devices) should be matched in the frequency band that the 87SR element uses. Applying low-pass filters to the rotor and stator currents helps with matching the frequency responses of the 87SR differential element current-measuring devices. These filters can be selected to have a cut-off frequency of several hundred hertz without adversely impacting the 87SR differential element operating speed.

As stated above, the 87SR differential element typically uses measuring devices for the stator and rotor currents that are different in kind. In such cases, it may be beneficial that the percentage restraining operation in **Figure 3** develops separate restraining components for the stator and rotor currents instead of using the average of the two currents to develop a common restraining current. Accounting separately for CT errors and rotor current-measuring device errors avoids over-restraining and improves the 87SR differential element sensitivity without jeopardizing security.

Equation 3 calculates a current magnitude. Therefore, the two compared currents in the 87SR differential element are always positive. As a result, the 87SR differential element is insensitive to the current measurement polarity convention in the stator and rotor. The rotor currents must be measured on the rotor side of the crowbar so that they always reflect currents in the windings regardless of the position of the crowbar.

The turns ratio N_{RS} in Figure 3 may be determined by using the machine nameplate data and verify it by using a recording of a generator operation, calculating the currents using Equation 3, and obtaining their ratio. Records may be captured for two or more different conditions in order to verify the turns ratio (such as load and external fault, or two different load conditions). The 87SR differential element can provide an auto-set feature: it can calculate the turns ratio automatically and use it as a setting after a one-time user command to auto-set the 87SR differential element turns ratio. If used in this application, the auto-set feature would remove the magnetizing current from the 87SR differential current in the steady-state conditions.

In various embodiments, application of the 87SR differential element may address magnetizing current. The excitation current that flows during normal operation is small, and the 87SR differential element may address it by using the minimum pickup threshold.

During external faults, the generator currents rise or exhibit a slowly decaying dc offset. Such a fault response may cause the generator stator or rotor steel to saturate. After the fault is cleared, the increased magnetizing current becomes a larger fraction of the measured currents and may jeopardize the 87SR differential element security because of insufficient restraining. This challenge may be addressed by using one or more of the following solutions.

Equation 4 may maintain an elevated restraint even after the external fault is cleared. In various embodiments, a slower decay with a time constant on the order of 0.5 s may be used to maintain an elevated restraint for a longer time period.

In various embodiments, the EFD logic may extend the EFD bit for an extra time period, such as for 1 to 2 s, to force a high SLOPE multiplier and to counter the spurious differential current caused by the saturated core.

In various embodiments, the 87SR differential element may remain active for a short time period following the external fault inception, such as for 2 cycles, and may be temporarily disabled afterward to avoid the spurious differential current that follows the external fault clearance. An arming logic may re-enable the 87SR differential element in 1 to 2 s following the post-fault steady-state condition.

In various embodiments, the differential and restraining currents may be developed as integrals of the classical i_{DIF} and i_{RST} currents in **Figure 3** so that the high restraining current from the time of the fault continues to boost the restraint after the fault is cleared. In some implementations the integral should "forget" the old values in about 1 to 2 s in order to restore full sensitivity for internal faults.

In addition to the above embodiments implementing 87SR differential elements, further embodiments may implement a phase-comparison (87PC) element. The 87PC logic prioritizes the use of signal polarity over signal magnitude. This makes it attractive when solving the magnetizing current problem. It has been observed in certain implementations, internal faults involving a small number of turns may cause small incremental components in the stator and rotor currents, which are insufficient for the differential element to detect the fault. This sensitivity limitation could be addressed by reducing the slope of the differential characteristic. However, the differential current can become significant during external faults due to magnetizing current. The differential current may momentarily exceeds 30 percent of the restraining current in this case.

These two cases create conflicting requirements for differential logic. However, it may be observed that the stator and rotor currents, while not identical, track one another during external faults. When one current increases, the other also increases; when one decreases, the other decreases. This behavior enables the use of phase comparison. The 87PC emphasizes phase alignment rather than magnitude matching. That is, even though the current magnitudes in the stator and rotor do not align perfectly, the polarity (phase) of their incremental changes aligns well.

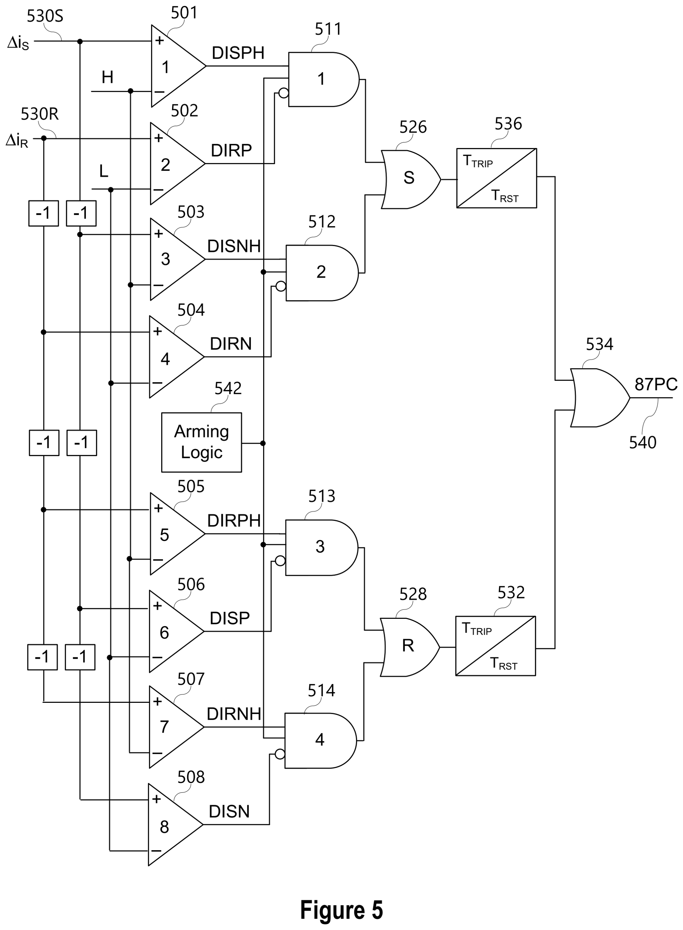

**Figure 5** illustrates a simplified implementation of the 87PC principle as applied to the stator-rotor protection of wound-rotor asynchronous generators.

In various embodiments, the phase comparison embodiments operate on incremental stator and rotor currents, Δi_{S} and Δi_{R}, respectively. These incremental currents are obtained by subtracting past samples from present samples. The past samples may be, but do not need to be delayed by an integer number of power cycles because the stator and rotor currents, i_{S} and i_{R}, remain constant under steady state conditions before the fault. The selected memory time for obtaining the incremental currents, T_{MEM}, must be coordinated with the arming logic and with the integrating time T_{TRIP}.

In general, no trip is asserted when both of the stator and rotor currents change in the same direction, that is, the polarities of the change in stator current and the change in rotor current are the same and both currents exceed a threshold. Because the currents have moved together, a fault is more likely to be external. Conversely, if both the stator and rotor currents change, and the change in one of the currents exceeds a threshold, and the changes are not of the same polarity, then a trip may be asserted, as this indicates an internal fault. Similarly, if only one of the stator and rotor currents change, and the change exceeds a threshold, then a trip may be asserted as this indicates an internal fault. The changes in the stator and rotor currents may be determined using incremental quantities, namely, incremental stator and rotor currents, Δi_{S} and Δi_{R}.

As illustrated in **Figure 5****,** a fault may be detected when one of Δi_{S} 530S and Δi_{R} 530R exceeds a threshold (such as a high threshold H, detailed below) and the polarity of other of Δi_{S} 230S and Δi_{R} 230R does not match the polarity of the incremental current that exceeded the threshold (or is less than a low threshold). As indicated above, during external faults the incremental stator 230S and rotor 230R currents track each other, so large changes in one of the currents that are not matched by changes in the other current may indicate an internal fault condition.

High (H) and low (L) thresholds determine polarity of the incremental currents. Two thresholds ensure secure blocking. The tripping comparators 501, 503, 505 and 507) use the higher threshold H, while the blocking comparators 502, 504, 506 and 508 use the lower threshold L. For example, H may be selected as 0.1 pu and L may be selected as 0.05 pu. AND gate 511 asserts when the Δi_{S} 530S current is high-positive (DISPH) and the Δi_{R} 530R current is not positive (DIRP). A DIRP value of logic 0 indicates that the rotor current has either not changed significantly or has changed in the negative direction. Similarly, AND gate 512 asserts when the Δi_{S} 530S current is high-negative (DISNH) and the Δi_{R} 530R current is not negative (DIRN).

Once either AND gate 511 or 526 AND gate 512 assert, an integrating timer 536 begins to accumulate time. The timer 536 asserts its output once the accumulated time reaches T_{TRIP}. As an example, T_{TRIP} can be selected as 50 ms. If the input to the timer 536 drops out temporarily, the timer 536 resets fully after a reset delay T_{RST}. The T_{RST} value can be selected as a few milliseconds.

AND gates 513 and 514, OR gate 528, and integrating timer 532 perform the same function, but with the roles of the stator and rotor incremental currents reversed (the rotor incremental current is high and the stator incremental current does not block).

Upon assertion of either of the integrating timers 536, 532, OR gate 534 asserts the 87PC signal 540 indicating a turn-fault condition using the phase comparison principle.

The arming logic 542 supervises the AND gates 511, 512, 513, 514. It asserts once the stator and rotor currents remain unchanged for a set duration T_{SS} and remains asserted for a time T_{ARM} following any disturbance. In various embodiments, the coordination rules expressed in Equations 5 and 6 must be satisfied: ${T}_{SS} > {T}_{MEM} > {T}_{TRIP}$ ${T}_{ARM} > {T}_{TRIP}$

For illustration, the following values may be used: T_{MEM} equal to 300 ms, T_{SS} equal to 500 ms, T_{TRIP} equal to 50 ms, T_{ARM} equal to 100 ms, and T_{RST} equal to 2 ms.

With these sample time values, the arming logic 542 requires 500 ms of steady state prior to a disturbance in order to enable operation of the scheme. Once a disturbance begins, the arming logic keeps 542 the scheme enabled for 100 ms. During this 100 ms interval, the integrating timer must accumulate 50 ms of asserted input for the 87PC logic to issue a trip signal 536. While accumulating toward the 50 ms requirement, the timer resets fully if its input is deasserted for more than 2 ms.

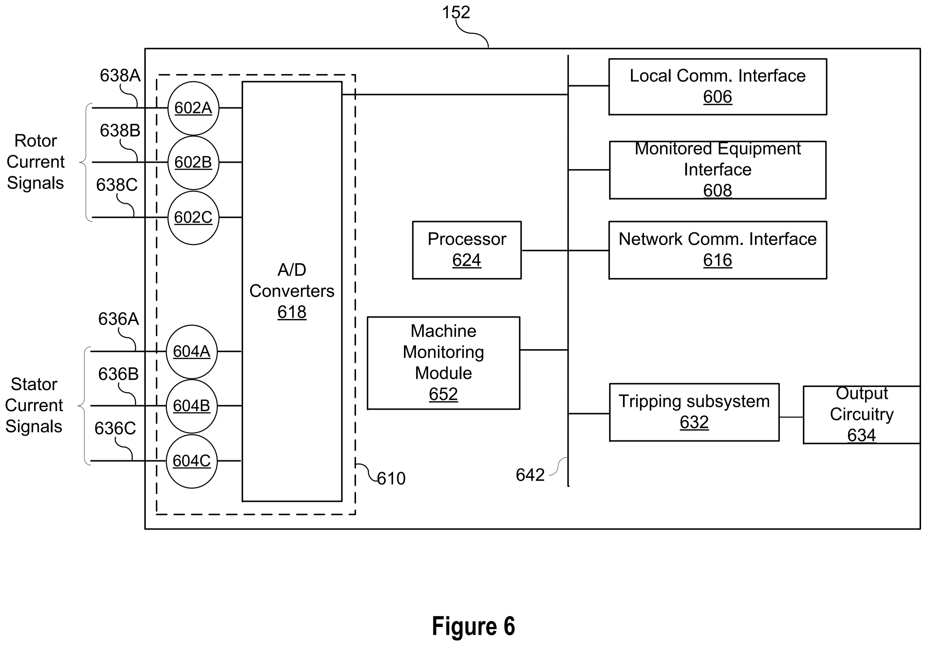

**Figure 6** illustrates a simplified block diagram of an IED for protection of multi-phase wound-rotor machines using equivalent current in accordance with several embodiments herein, and effecting a protective action upon detection. IED 152 may be configured to perform a variety of tasks using a configurable combination of hardware, software, firmware, and/or any combination thereof. The illustrated embodiment includes hardware and software, and may be implemented in an embedded system, field programmable gate array implementations, and specifically designed integrated circuit. In some embodiments, functions described in connection with various software modules may be implemented in various types of hardware. Moreover, certain components or functions described herein may be associated with other devices or performed by other devices. The specifically illustrated configuration is merely representative of one embodiment consistent with the present disclosure.

IED 152 may include a sensor component 610 (e.g., sensor circuitry) to obtain electrical signals related to multi-phase wound-rotor machine. The sensor component 610 may be configured to obtain current signals (and other signals, if available, such as zero-sequence voltage signals, neutral voltage signals, neutral current signals, or other such signals) useful for determining a fault condition of the machine. In the illustrated embodiment, sensor component 610 is configured to gather data directly from instrument transformers and may use, for example, A/D converters 618 that may sample and/or digitize filtered waveforms to form corresponding digitized current and/or voltage signals provided to data bus 642. Inputs 636A, 636B, 636C include current signals from the stator, which may be obtained using CTs such as CT 136; and inputs 638A, 638B, and 638C include current signals from the rotor, which may be obtained using current measurement sensors 138. Conditioning circuitry 602A, 602B, 602C, 604A, 604B, and 604C may reduce the voltage or current to a level appropriate for monitoring the terminator. A/D converters 618 may include a single A/D converter or separate A/D converters for each incoming signal. A current signal may include separate current signals from each phase of a three-phase electric power system. A/D converters 618 may be connected to processor 624 by way of data bus 642, through which representations of electrical signals may be transmitted to processor 624. In various embodiments, the representations of electrical parameters may represent parameters, such as currents, voltages, frequencies, phases, and other parameters associated with an electric power distribution system. Conditioning circuitry 602A-C and 604A-C may represent a variety of types of elements, such as voltage transformers, current transformers, status inputs, a breaker controller, etc. Sensor component 610 may be configured to receive digitized analog signals from merging units, which need little if any additional filtering, sampling, or processing before use by the processor 624.

Processor 624 may be configured to process communications received via communications interface 616, monitored equipment interface 608, local communications interface 606, and/or sensor component 610. Processor 624 may operate using any number of processing rates and architectures. Processor 624 may be configured to perform various algorithms and calculations described herein. Processor 624 may be embodied as a general-purpose integrated circuit, an application specific integrated circuit, a field-programmable gate array, and/or any other suitable programmable logic device. In some embodiments, the processor 624 may be generally referred to as processing circuitry.

A machine monitoring module 652 may be configured to monitor the multi-phase wound-rotor machine using measured values and/or statuses received over communications. In particular, the monitoring module 652 may use the stator and rotor currents to determine equivalent stator and rotor currents, and use such equivalent stator and rotor currents to determine a fault condition of the monitored multi-phase wound-rotor machine in accordance with several embodiments described herein. The monitoring module 652 may include instructions stored on non-transitory computer-readable storage media that, when executed using a processor, cause the IED 152 to determine a fault condition in accordance with the embodiments herein, and effect a protective action such as tripping a circuit breaker upon detection of the fault condition.

A tripping subsystem 632 may be configured to issue a trip command based upon determination of the fault condition. In various embodiments, the tripping subsystem 632 may be in communication with a breaker, merging unit, or other device that may be configured to interrupt an electrical connection between the transformer and an electric power delivery system.

In various embodiments, the tripping subsystem 632 may issue trip commands via an electrical or electromechanical interrupter, such as output circuitry 634. In some embodiments, IED 152 may be configured to issue trip commands upon detection of the fault condition or other protection elements. In various embodiments the IED 152 may be configured to communicate the determined fault condition to other systems, and/or communicate to other systems that a trip command has been issued.

IED 152 may include a monitored equipment interface 608 to receive status information from, and issue control instructions to, a piece of monitored equipment. In some embodiments, the monitored equipment may be a multi-phase wound-rotor machine, a transformer, a circuit breaker, or the like, and IED 152 may be configured to control the operation of the monitored equipment.

A local communication interface 606 may also be provided for local communication. The local communication interface 806 may be embodied in a variety of ways, including as a serial port, a parallel port, a Universal Serial Bus (USB) port, an IEEE 1394 Port, and the like.

IED 152 may include a network communications interface 616 configured to communicate with other IEDs and/or system devices. In certain embodiments, the network communications interface 616 may facilitate direct communication with another IED or communicate with another IED over a communications network. The network communications interface 616 may facilitate communications with multiple IEDs. Note that any suitable communication network and/or communication channel may be used to communicate suitable data among IEDs and supervisory systems.

Certain embodiments include a system for protecting a multi-phase wound-rotor electric machine of an electric power delivery system, that comprises: a protective device in electrical communication with the multi-phase wound-rotor electric machine, that includes: a stator current sensor component to obtain stator current signals corresponding with stator currents from each phase of a stator of the multi-phase wound-rotor electric machine; a rotor current sensor component to obtain rotor current signals corresponding with rotor currents from each phase of the rotor of the multi-phase wound-rotor electric machine; a processor; and, a computer-readable storage medium in communication with the processor, the stator current sensor component and the rotor current sensor component, comprising instructions that when operated cause the processor to: calculate an equivalent stator current as a function of the stator current signals from each phase of the stator; calculate an equivalent rotor current as a function of the rotor current signals from each phase of the rotor; execute a protection element to determine a fault condition based on a relative comparison of the equivalent stator current and the equivalent rotor current, and to assert a fault signal upon determination of the fault condition; and implement a protective action based on the assertion of the fault signal.

The multi-phase wound-rotor electric machine may comprise a doubly-fed induction generator. The doubly-fed induction generator may comprise an adjustable-speed pumped storage hydro unit. The protection element may comprise instructions that cause the processor to: determine a differential current as a difference of the equivalent stator current and the equivalent rotor current; determine a variable restraint threshold as a function of a sum of the equivalent stator current and the equivalent rotor current; compare the differential current with a variable restraint threshold; and when the differential current exceeds the variable restraint threshold, assert the fault signal. The protection element may further comprise external fault detection. The external fault detection may be asserted when a change in differential current is not detected after a change in a restraining current. The protection element may comprise instructions to assert the fault signal independent of electric power system voltage signals. The protection element may comprise instructions to assert the fault signal independent of signals related to rotor position. The protection element may comprise instructions that cause the processor to: calculate a stator incremental current from the equivalent stator current; calculate a rotor incremental current from the equivalent rotor current; determine whether the stator incremental current and rotor incremental current exhibit opposite polarity; determine whether the stator incremental current or the rotor incremental current exceed a first predetermined threshold; and when the stator incremental current and the rotor incremental current do not exhibit the same polarity of change, issue the fault signal. The protection element may comprise instructions that cause the processor to: when one of the stator incremental current and the rotor incremental current exceed a threshold, determine the fault condition. The protection element may further comprise an arming logic, and wherein the protection element asserts the fault signal when both the fault condition is determined and the arming logic asserts an arming signal. The arming logic may assert the arming signal for a predetermined time following a condition when changes the equivalent stator current and changes in the equivalent rotor current are both lower than a predetermined arming threshold for a predetermined arming time. The fault condition may be determined when, for a predetermined tripping time, the stator incremental current and the rotor incremental current do not exhibit the same polarity and one of the stator incremental current and rotor incremental current exceed the first predetermined threshold. The protection element may comprise an integrating timer to detect the tripping condition.

Certain embodiments may include a method for protecting a multi-phase wound-rotor electric machine of an electric power delivery system, comprising: obtaining stator current signals corresponding with stator currents from each phase of a stator of the multi-phase wound-rotor electric machine; obtaining rotor current signals corresponding with rotor currents from each phase of a rotor of the multi-phase wound-rotor electric machine; calculating an equivalent stator current as a function of the stator current; executing a protection element to determine a fault condition based on a relative comparison of the equivalent stator current and the equivalent rotor current, and to assert a fault signal upon determination of the fault condition; and implementing a protective action based on the assertion of the fault signal. The protection element may comprise a differential protection element, and further comprising: determining a differential current as a difference of the equivalent stator current and the equivalent rotor current; determining a variable restraint threshold as a function of a sum of the equivalent stator current and the equivalent rotor current; comparing the differential current with a variable restraint threshold; and when the differential current exceeds the variable restraint threshold, assert the fault signal. The protection element may comprise a phase comparison protection element, and further comprising: calculating a stator incremental current from the equivalent stator current; calculating a rotor incremental current from the equivalent rotor current; determining whether the stator incremental current and rotor incremental current exhibit opposite polarity; determining whether the stator incremental current or the rotor incremental current exceed a first predetermined threshold; and when the stator incremental current and the rotor incremental current do not exhibit the same polarity of change, issue the fault signal. The method may further comprise: when one of the stator incremental current and the rotor incremental current exceed a threshold, determine the fault condition.

The embodiments set forth in the present disclosure may be susceptible to various modifications and alternative forms, specific embodiments have been shown by way of example in the drawings and have been described in detail herein. However, it may be understood that the disclosure is not intended to be limited to the particular forms disclosed. The disclosure is to cover all modifications, equivalents, and alternatives falling within the spirit and scope of the disclosure as defined by the following appended claims. In addition, the techniques presented and claimed herein are referenced and applied to material objects and concrete examples of a practical nature that demonstrably improve the present technical field and, as such, are not abstract, intangible or purely theoretical.

## Claims

1. A system for protecting a multi-phase wound-rotor electric machine of an electric power delivery system, comprising:
a protective device in electrical communication with the multi-phase wound-rotor electric machine, comprising:
a stator current sensor component to obtain stator current signals corresponding with stator currents from each phase of a stator of the multi-phase wound-rotor electric machine;
a rotor current sensor component to obtain rotor current signals corresponding with rotor currents from each phase of the rotor of the multi-phase wound-rotor electric machine;
a processor; and,
a computer-readable storage medium in communication with the processor, the stator current sensor component and the rotor current sensor component, comprising instructions that when operated cause the processor to:
calculate an equivalent stator current as a function of the stator current signals from each phase of the stator;
calculate an equivalent rotor current as a function of the rotor current signals from each phase of the rotor;
execute a protection element to determine a fault condition based on a relative comparison of the equivalent stator current and the equivalent rotor current, and to assert a fault signal upon determination of the fault condition; and
implement a protective action based on the assertion of the fault signal.

2. The system of claim 1, wherein the protection element comprises instructions that cause the processor to:
determine a differential current as a difference of the equivalent stator current and the equivalent rotor current;
determine a variable restraint threshold as a function of a sum of the equivalent stator current and the equivalent rotor current;
compare the differential current with a variable restraint threshold; and
when the differential current exceeds the variable restraint threshold, assert the fault signal.

3. The system of claim 2, wherein the protection element further comprises external fault detection.

4. The system of claim 3, wherein the external fault detection is asserted when a change in differential current is not detected after a change in a restraining current.

5. The system of claim 2, wherein the protection element comprises instructions to assert the fault signal independent of electric power system voltage signals.

6. The system of claim 2, wherein the protection element comprises instructions to assert the fault signal independent of signals related to rotor position.

7. The system of claim 1, wherein the protection element comprises instructions that cause the processor to:
calculate a stator incremental current from the equivalent stator current;
calculate a rotor incremental current from the equivalent rotor current;
determine whether the stator incremental current and rotor incremental current exhibit opposite polarity;
determine whether the stator incremental current or the rotor incremental current exceed a first predetermined threshold; and
when the stator incremental current and the rotor incremental current do not exhibit the same polarity of change, issue the fault signal.

8. The system of claim 7, wherein the protection element comprises instructions that cause the processor to:
when one of the stator incremental current and the rotor incremental current exceed a threshold, determine the fault condition.

9. The system of claim 8, wherein the protection element further comprises an arming logic, and wherein the protection element asserts the fault signal when both the fault condition is determined and the arming logic asserts an arming signal.

10. The system of claim 9, wherein the arming logic asserts the arming signal for a predetermined time following a condition when changes the equivalent stator current and changes in the equivalent rotor current are both lower than a predetermined arming threshold for a predetermined arming time.

11. The system of claim 9, wherein the fault condition is determined when, for a predetermined tripping time, the stator incremental current and the rotor incremental current do not exhibit the same polarity and one of the stator incremental current and rotor incremental current exceed the first predetermined threshold.

12. A method for protecting a multi-phase wound-rotor electric machine of an electric power delivery system, comprising:
obtaining stator current signals corresponding with stator currents from each phase of a stator of the multi-phase wound-rotor electric machine;
obtaining rotor current signals corresponding with rotor currents from each phase of a rotor of the multi-phase wound-rotor electric machine;
calculating an equivalent stator current as a function of the stator current;
executing a protection element to determine a fault condition based on a relative comparison of the equivalent stator current and the equivalent rotor current, and to assert a fault signal upon determination of the fault condition; and
implementing a protective action based on the assertion of the fault signal.

13. The method of claim 12, wherein the protection element comprises a differential protection element, and further comprising:
determining a differential current as a difference of the equivalent stator current and the equivalent rotor current;
determining a variable restraint threshold as a function of a sum of the equivalent stator current and the equivalent rotor current;
comparing the differential current with a variable restraint threshold; and
when the differential current exceeds the variable restraint threshold, assert the fault signal.

14. The method of claim 12, wherein the protection element comprises a phase comparison protection element, and further comprising:
calculating a stator incremental current from the equivalent stator current;
calculating a rotor incremental current from the equivalent rotor current;
determining whether the stator incremental current and rotor incremental current exhibit opposite polarity;
determining whether the stator incremental current or the rotor incremental current exceed a first predetermined threshold; and
when the stator incremental current and the rotor incremental current do not exhibit the same polarity of change, issue the fault signal.

15. The method of claim 14, further comprising:
when one of the stator incremental current and the rotor incremental current exceed a threshold, determine the fault condition.
